# FASCICULE DE BREVET EUROPEEN

(11) **EP 4 405 609 B1**
(45) Date de publication et mention de la délivrance du brevet: **17.06.2026**
(21) Numéro de dépôt: 22798067.9
(22) Date de dépôt: 22.09.2022
(51) Int. Cl.: F16L 55/17

(54) **DISPOSITIF DE COLMATAGE D'UNE FUITE SUR UNE CANALISATION DE TRANSPORT ET/OU SUR UN RESERVOIR DE FLUIDE**
VORRICHTUNG ZUM ABDICHTEN EINER LECKAGE IN EINER FLÜSSIGKEITSFÜHRENDEN LEITUNG UND/ODER IN EINEM FLÜSSIGKEITSBEHÄLTER
DEVICE FOR SEALING A LEAK IN A FLUID-TRANSPORTING PIPE AND/OR IN A FLUID RESERVOIR

(30) Priorité: 22.09.2021 FR 2109958
(43) Date de publication de la demande: 31.07.2024
(73) Titulaire: 3X Engineering, 98000 Monaco (MC)
(72) Inventeur: DAUMAS, Didier, 06300 NICE (FR)
(74) Mandataire: Bonneau, Florence
(86) Numéro de dépôt international: PCT/EP2022/076311
(87) Numéro de publication internationale: WO 2023/046808

(56) Documents cités:
- EP-B1- 1 104 532
- US-A- 2 069 722
- US-A- 4 391 300
- US-A1- 2013 264 815

## Description

### Domaine technique

La présente invention concerne le domaine technique des dispositifs pour réparer les tuyaux au moyen d'anneaux, de bandes ou de manchons pressés contre la surface extérieure du tuyau et concerne en particulier un dispositif de colmatage d'une fuite sur une canalisation de transport et/ou sur un réservoir de fluide.

### Etat de la technique

Les canalisations de transport de fluide et, en particulier, les fluides sous pression, comme le pétrole et le gaz, subissent des détériorations dans l'épaisseur de leur paroi qui peuvent se transformer en fissures et créer des fuites. Une technique de réparation d'une canalisation et/ou réservoir présentant une fuite consiste à appliquer un élastomère à l'endroit de la fuite placé à l'intérieur d'un manchon formé de deux demi-coquilles serrées autour de la canalisation. Ce dispositif de colmatage présente plusieurs inconvénients. D'une part, la pression de serrage du manchon sur la canalisation doit être suffisante pour que l'élastomère applique une pression nécessaire pour contenir la fuite. D'autre part, les demi-coquilles étant adaptées à un diamètre déterminé de canalisation, il faut donc prévoir des coquilles ayant autant de diamètres différents qu'il y a de diamètres différents de canalisations. Les dispositifs en deux demi-coquilles ne sont pas adaptés au diamètre des réservoirs qui peut atteindre plusieurs mètres.

Une autre technique décrite dans le brevet EP 1 104 532 consiste à appliquer une plaque d'élastomère en utilisant un applicateur d'efforts et un répartiteur d'efforts contre la fissure et un mécanisme de serrage disposé autour de la canalisation pour appliquer une force sur l'applicateur d'efforts. L'applicateur d'efforts transmet des forces sur la plaque d'élastomère à l'endroit de la fissure contraignant l'élastomère à se déformer de façon à épouser la forme de la fissure et ainsi permet de colmater cette fissure. Ce dispositif permet d'imposer une contre-pression à l'interface élastomère-canalisation de manière à s'opposer à la pression interne du fluide contenue dans la canalisation. Cette contre-pression est développée grâce à la tension mécanique du mécanisme de serrage disposé autour de la canalisation et autour du dispositif.

Un tel dispositif de colmatage présente l'avantage de s'adapter à de nombreux diamètres de canalisations. Cependant ce dispositif de colmatage présente plusieurs inconvénients.

D'une part, la pression importante et permanente sur la plaque d'élastomère comprime la plaque et se traduit par un cisaillement de l'élastomère sur le bord de l'orifice dû à la différence de pression entre la bordure de l'orifice et l'intérieur de l'orifice. Ce cisaillement permanent et de grande amplitude peut conduire à l'endommagement de l'élastomère et alors provoquer la fuite.

D'autre part, en appliquant un couple maximal de serrage de 40 N.m sur le mécanisme, la pression obtenue sur l'élastomère plafonne à environ 80 bars à 20° C. Ce qui signifie que pour atteindre une pression supérieure il faut augmenter le couple de serrage. Or au-delà d'un couple de serrage de 40 N.m, la plaque d'élastomère se détériore et devient inefficace.

En outre, même avec un couple de serrage maximum de 40 N., la contre pression exercée à l'endroit de la fuite diminue rapidement avec le temps et ne s'oppose plus suffisamment à la pression interne du fluide et le dispositif de colmatage fuit une dizaine de jours après avoir été posé.

### Exposé de l'invention

C'est pourquoi, le but de l'invention est de réaliser un dispositif de colmatage d'une fuite sur une canalisation comportant une plaque d'élastomère et des moyens pour appliquer une pression sur cette plaque qui permet d'imposer une contre-pression à l'interface élastomère-canalisation suffisante pour colmater la fuite de façon durable.

### Solution technique

L'objet de l'invention est donc un dispositif de colmatage d'une fuite sur une paroi de canalisation ou de réservoir présentant un orifice, comprenant une plaque d'élastomère appliquée sur la paroi à l'endroit de l'orifice, un applicateur d'efforts et un répartiteur d'efforts appliqués sur la plaque d'élastomère et des moyens pour appliquer un couple de serrage sur l'applicateur d'efforts. Selon les caractéristiques principales de l'invention, le répartiteur d'efforts a une face interne destinée à être plaquée sur la plaque d'élastomère, la face interne présentant une zone active correspondant à une protubérance et une zone inactive située autour de la protubérance de façon à ce que lorsque le couple de serrage est appliqué sur l'applicateur d'efforts, la zone active génère une pression sur la plaque d'élastomère supérieure à la pression générée par la zone inactive du répartiteur sur la plaque d'élastomère.

### Brève description des figures

Les buts, objets et caractéristiques de l'invention apparaîtront plus clairement à la lecture de la description qui suit faite en référence aux dessins dans lesquels :
[Fig. 1] représente une vue en perspective de dessus de l'applicateur et du répartiteur d'efforts selon un premier mode de réalisation du dispositif de colmatage selon l'invention,
[Fig. 2] représente une vue en perspective et de dessous de l'applicateur et du répartiteur d'efforts de la figure 1,
[Fig. 3] représente une vue en coupe de l'applicateur et du répartiteur d'efforts selon un second mode de réalisation,
[Fig. 4] représente une vue en coupe longitudinale de l'applicateur et du répartiteur d'efforts du dispositif de colmatage selon l'invention,
[Fig. 5] représente une vue de face de l'applicateur et du répartiteur d'efforts du dispositif de colmatage selon l'invention,
[Fig. 6] représente une vue en coupe du dispositif de colmatage appliqué sur la canalisation avant serrage,
[Fig. 7] représente une vue en coupe du dispositif de colmatage appliqué sur la canalisation après serrage,
[Fig. 8] représente la vue en coupe de la figure 6 avec une alternative de réalisation de la plaque d'élastomère,
[Fig. 9] représente la vue en coupe de la figure 7 avec une alternative de réalisation de la plaque d'élastomère,
[Fig. 10] représente un dispositif de colmatage selon l'invention avec applicateur et répartiteur d'efforts dissociés,
[Fig. 11] représente une vue en perspective de l'applicateur et du répartiteur d'efforts selon un troisième mode de réalisation du dispositif de colmatage selon l'invention,
[Fig. 12] représente une vue de dessous de l'applicateur et du répartiteur d'efforts de la figure 11,
[Fig. 13] représente le dispositif de colmatage selon le troisième mode de réalisation de l'invention en place sur la canalisation,
[Fig. 14] représente une vue en coupe du dispositif de colmatage selon le troisième mode de réalisation de l'invention.

### Description détaillée de l'invention

De manière générale, les différentes parties constitutives représentées sur les figures ne sont pas à l'échelle et le dispositif de colmatage selon l'invention peut s'appliquer sur une canalisation ou un réservoir mais pour des raisons de commodités le terme canalisation est désigné seulement dans la suite de la description. Le dispositif de colmatage 10 selon l'invention comprend un applicateur d'efforts 12 destiné à transmettre la tension du moyen de serrage placée autour d'une canalisation et enserrant le dispositif de colmatage selon l'invention. L'applicateur d'efforts 12 convertit donc cette tension en efforts. Selon l'invention, le moyen de serrage est composé d'au moins une sangle de façon à former une ceinture de serrage. La ceinture de serrage sous forme de sangle permet d'absorber les défauts d'aspérités de la canalisation grâce à sa souplesse et sa flexibilité et peut s'adapter à de grand diamètre de canalisation ou de réservoir de l'ordre de plusieurs mètres (4 à 5 m de diamètre, voir 10 mètres de diamètre).

L'applicateur d'efforts 12 comprend sur sa face externe des fentes dans deux directions. Il comprend une première série de fentes 23 selon des plans perpendiculaires à une direction ZZ', l'axe ZZ' représentant la direction longitudinale de la canalisation et une seconde série de fentes 21 selon des directions parallèles à l'axe longitudinal ZZ'. Les fentes définissent une pluralité d'excroissance 22 d'épaisseur variable selon la direction radiale. Les fentes permettent d'adapter l'applicateur d'efforts à différents diamètres de canalisation. Les excroissances 22 de l'applicateur d'efforts 12 présentent une différence d'épaisseur dans la largeur de l'applicateur, la longueur de celui-ci étant considérée selon l'axe ZZ', de sorte que l'applicateur d'efforts a une épaisseur variable, maximale dans un plan de symétrie passant par l'axe ZZ' et qui va en diminuant vers les bords latéraux de l'applicateur. Grâce à la différence d'épaisseur des excroissances 22, les efforts transmis par la ceinture de serrage sont répartis uniformément sur toute la largeur de l'applicateur. Cet applicateur d'efforts est très bien adapté à de très petits diamètres de canalisation.

L'applicateur d'efforts 12 transmet donc la tension de la ceinture de serrage convertie en force sur chacune des excroissances qui transmettent à leur tour ces efforts de pression à un répartiteur 20.

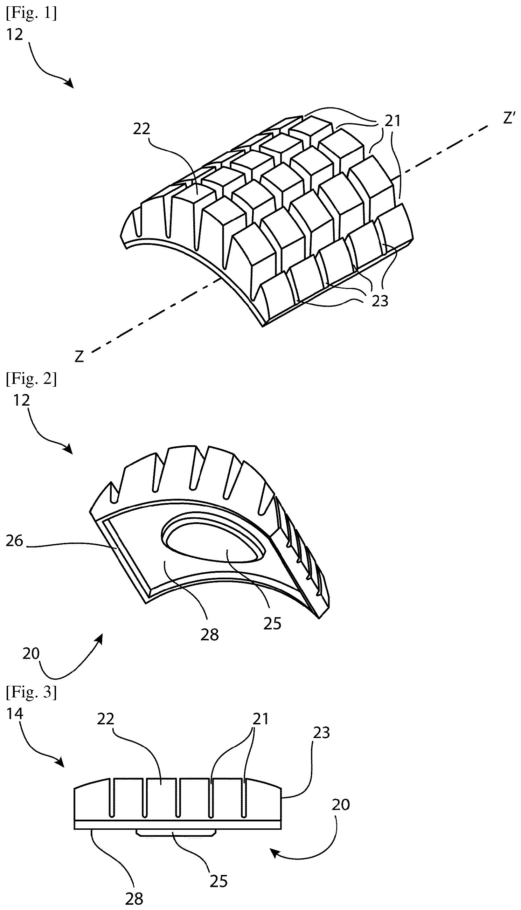

Comme on peut le voir sur la figure 2, le répartiteur 20 est situé sur la face interne de l'applicateur d'efforts 12 orientée vers la canalisation et de forme concave ou plane. L'applicateur d'effort 12 et le répartiteur 20 étant flexibles, ils peuvent se déplier ou se fermer pour s'adapter à une large gamme de diamètres de canalisation. Le répartiteur 20 comprend une protubérance 25 de forme circulaire située sur la face interne 28 et de préférence centrée sur celle-ci. La protubérance est d'épaisseur constante et présente un congé ou un arrondi sur ses bords. Le matériau utilisé pour l'applicateur d'efforts 12 et 14 et le répartiteur 20 est de préférence une matière plastique rigide mais déformable telle que du polyamide, du polypropylène ou du polycarbonate.

Selon un second mode de réalisation représenté en coupe sur la figure 3 selon un plan perpendiculaire à l'axe ZZ' représentant toujours la direction longitudinale de la canalisation, l'applicateur d'efforts 14 comprend sur sa face externe des fentes dans deux directions, une première série de fentes 23 selon des plans perpendiculaires à l'axe ZZ' et une seconde série de fentes 21 selon des directions parallèles à l'axe longitudinal ZZ', l'ensemble des fentes définissant une pluralité d'excroissances 22. Les excroissances 22 sont d'épaisseur égale sauf pour les excroissances situées sur les deux bordures de l'applicateur situées parallèlement à l'axe longitudinal ZZ' dont l'épaisseur décroit vers les bords longitudinaux de l'applicateur ceci afin de procurer des arêtes moins vives sur les bordures pour limiter l'usure de la sangle formant la ceinture de serrage.

Comme pour l'applicateur 12, l'applicateur 14 est associé à un répartiteur d'efforts 20 comportant sur sa face interne 28 une protubérance 25. L'applicateur d'efforts 14 transmet donc la tension de la ceinture de serrage convertie en force sur chacune des excroissances qui transmettent à leur tour ces efforts de pression à un répartiteur 20. Selon l'invention et quel que soit le mode de réalisation, le moyen de serrage est une partie distincte de l'applicateur d'effort et du répartiteur d'effort.

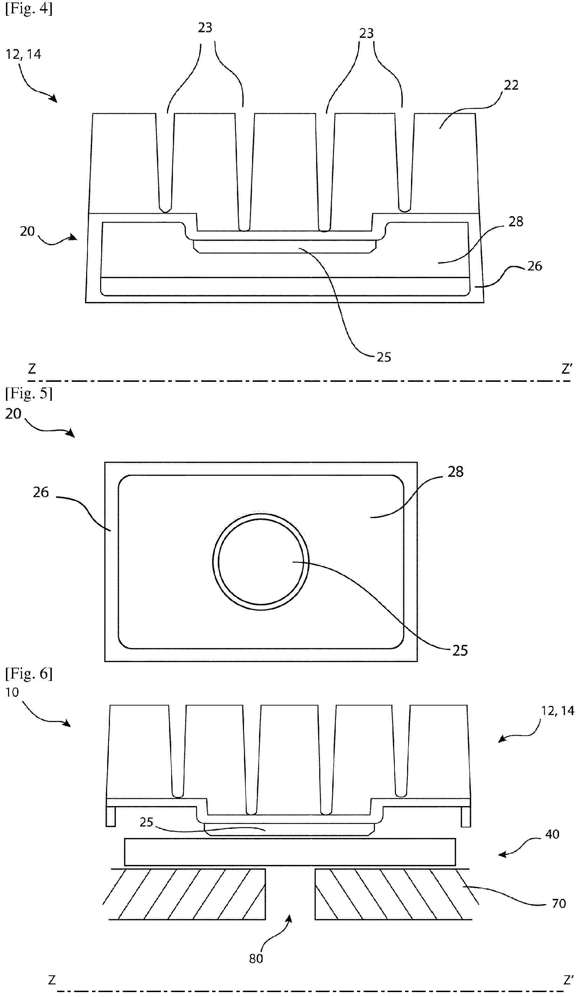

Selon la figure 4, l'applicateur 12 ou 14 et le répartiteur 20 sont vus en coupe selon un plan passant par l'axe ZZ' et coupant l'applicateur et le répartiteur en deux parties égales. Cette coupe est une coupe longitudinale. Comme on peut le voir, la largeur des fentes 23 est suffisante pour que les excroissances 22 aient une marge de déplacement les unes par rapport aux autres dans le cas d'une surface de canalisation comportant des bosses dues par exemple à des aspérités. La profondeur des fentes 23 situées en vis-à-vis de la protubérance 25 est maximale et plus importante que celle des autres fentes. La différence de profondeur est comprise entre 10 et 20 pourcents de la profondeur maximale. Ceci est bien visible sur la coupe de la figure 4. Cette caractéristique permet d'obtenir une flexibilité constante sur toute la surface du répartiteur. La face interne 28 comprend sur toute sa périphérie un rebord 26 visible sur la figure 4 seulement sur un bord longitudinal dû au fait que la face 28 est courbe mais la courbure ne constitue pas une limitation au dispositif 10 selon l'invention. Une vue de face du répartiteur 20 est représentée sur la figure 5.

La protubérance 25 de forme circulaire est centrée sur la face interne 28 du répartiteur. A l'endroit le plus épais de la protubérance, la hauteur de la protubérance 25 est fonction de son diamètre et la taille de son diamètre est adaptée à la taille du dispositif. L'arête de la protubérance 25 est remplacée par un congé ou un arrondi de 0,5 mm à 2 mm d'épaisseur.

La face interne 28 du répartiteur 20 est constituée d'une zone active qui correspond à la surface de la protubérance 25 et d'une zone inactive située sur la face interne 28 autour de la protubérance 25 et qui comprend également les rebords 26. La surface de la zone active représente entre 25 % et 40 % de la surface de la zone inactive. Cette répartition plus importante en faveur de la zone inactive est due au fait que lorsque le dispositif de colmatage est mis en place sur la paroi de la canalisation, la zone active se situe à l'aplomb de l'orifice et la zone inactive recouvre l'ensemble de la surface correspondant à la périphérie de l'orifice. Grâce à l'applicateur et au répartiteur, les efforts transmis par la ceinture de serrage sont répartis uniformément sur toute la surface du répartiteur destinée à être en contact avec la canalisation, cette surface comprend la zone active et la zone inactive.

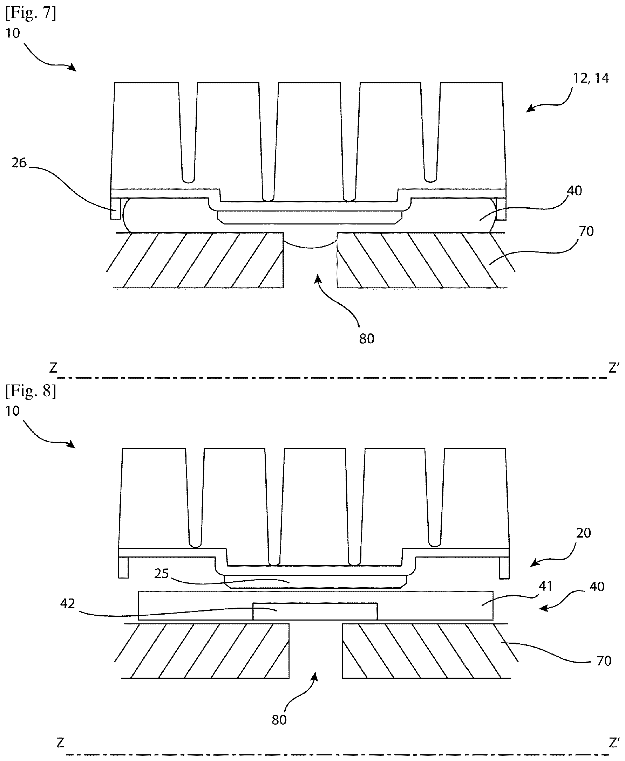

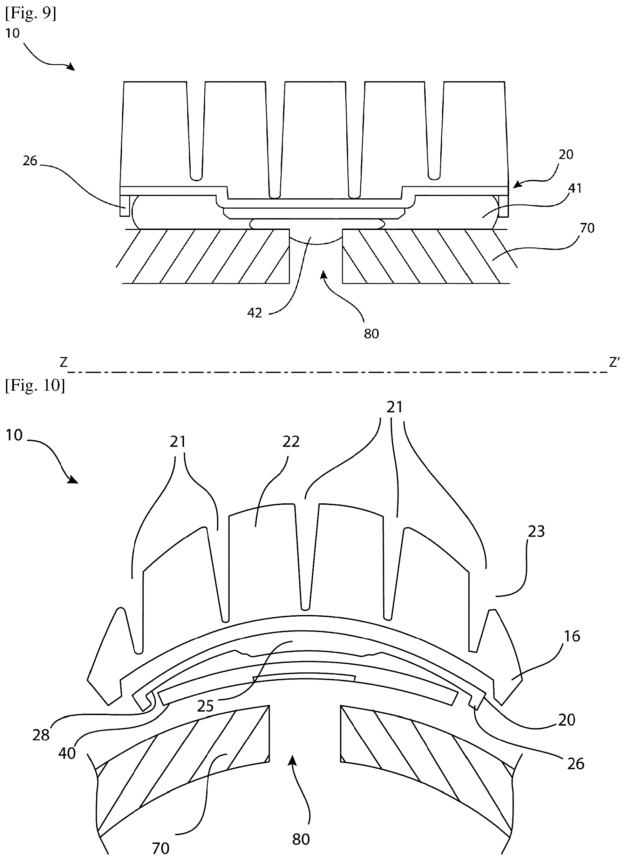

Les figures 6 à 9 illustrent le dispositif de colmatage 10 en coupe et en place contre une fuite sur la paroi d'une canalisation, le plan de coupe passant par l'axe ZZ'. La courbure de la surface en contact avec la canalisation n'est pas représentée comme sur la figure 4. Les figures 6 et 8 représentant le dispositif de colmatage 10 selon l'invention mis en place avant le serrage tandis que les figures 7 et 9 représentent le dispositif de colmatage 10 selon l'invention lorsqu'il est en place serré contre la canalisation à l'endroit de la fuite.

Sur la figure 6, une plaque d'élastomère 40 est positionnée sur la paroi 70 de la canalisation de façon à recouvrir l'orifice 80 à l'origine d'une fuite du contenu de la canalisation. La plaque d'élastomère 40 comprend une ou plusieurs matières. Selon un premier mode de réalisation représenté sur les figures 6 et 7, la plaque d'élastomère 40 est mono matière et est constituée d'un matériau homogène. La plaque d'élastomère 40 est recouverte du répartiteur 20 et de l'applicateur de forces 12. Lorsque ces trois parties qui composent le dispositif de colmatage selon l'invention sont serrées contre la canalisation 70 à l'endroit de la fuite 80, grâce à un moyen de serrage composé d'au moins une sangle formant une ceinture de serrage, le répartiteur multiplie la pression exercée par l'applicateur par le rapport des surfaces de contact par lesquelles les forces sont transmises à l'élastomère. La surface de contact de la protubérance donc de la zone active est inférieure à la surface d'application correspondant à l'ensemble des surfaces de la zone active et de la zone inactive, par conséquent, la pression exercée sur l'élastomère par la zone active est supérieure à la pression exercée par l'applicateur.

Le dispositif de colmatage 10 selon le premier mode de réalisation de l'invention est représenté sur la figure 7 lorsqu'il est serré sur la canalisation grâce à un moyen de serrage non représenté sur la figure, tel qu'une ceinture de serrage à base d'une ou plusieurs sangles. La ceinture de serrage est serrée avec un couple de serrage maximum égal à 40 N.m. Le répartiteur d'efforts 12 applique une pression de serrage sur la plaque d'élastomère qui de par son élasticité se déforme et est écrasée contre la paroi de la canalisation 70. Comme on peut voir en partie sur la figure 7, l'élastomère en contact avec la zone active est davantage déformé que celui situé en contact avec la zone inactive car il subit davantage de contraintes. La partie de la plaque d'élastomère 40 en contact avec la zone active du répartiteur se déforme au point qu'une partie de matière pénètre dans l'orifice 80. L'ensemble de la plaque d'élastomère 40 subit les pressions liées aux écrasements élastiques existants.

Au niveau de l'orifice de la canalisation, l'élastomère subit la pression du fluide interne et l'écrasement de la zone active, correspondant à la protubérance 25, du répartiteur 20. A la périphérie de l'orifice de la canalisation, l'élastomère subit un écrasement entre la zone inactive du répartiteur 20 et la paroi de la canalisation 70. A l'aplomb de l'orifice, l'élastomère subit des contraintes et des déformations supérieures à celles que subit la partie de l'élastomère située à la périphérie de l'orifice.

La zone active du répartiteur 20, correspondant à la protubérance 25 génère une pression sur la plaque d'élastomère supérieure à la pression générée par la zone inactive du répartiteur 20. Les deux zones du répartiteur d'efforts génèrent une répartition des pressions qui impose une contre-pression importante et proportionnelle avec le niveau de pression interne du fluide à l'endroit de la fuite et une pression moindre mais juste nécessaire et suffisante à la périphérie de la fuite pour ne pas endommager l'élastomère et garantir l'étanchéité du dispositif de colmatage selon l'invention de façon durable. Un judicieux choix des géométries de l'applicateur, du répartiteur et des propriétés des élastomères permet au dispositif selon l'invention de développer des contraintes capables de résister à la pression interne du fluide sans atteindre les valeurs des contraintes d'endommagement de l'élastomère. Pour cela, la zone active correspondant à la protubérance 25 du répartiteur 20, a une raideur constante quelle que soit sa dimension. Selon le matériau utilisé pour le répartiteur d'efforts, cette raideur est comprise entre 500 N/m et 5000 N/m et en particulier est comprise entre 1400 N/m et 1700 N/m lorsque le répartiteur d'effort est en polyamide. La pression interne du fluide contenu dans la canalisation peut atteindre 80 bars.

Selon une alternative de réalisation de l'invention représentée sur les figures 8 et 9, la plaque d'élastomère 40 est composée d'au moins deux matières différentes, une première matière 41 qui constitue la partie supérieure et les bords de la plaque d'élastomère 40 et une seconde matière 42 qui constitue la partie centrale et inférieure de la plaque d'élastomère. La seconde matière 42 est entourée sur sa partie supérieure et ses bords latéraux par la première matière 41, les faces inférieures des différentes matières étant situées dans le même plan composant la face inférieure de la plaque d'élastomère 40 destinée à venir en contact avec la paroi de la canalisation 70 à l'endroit de l'orifice 80, la seconde matière étant destinée à être plaquée sur l'orifice 80 de façon à le recouvrir. La seconde matière est un élastomère de dureté supérieure à la dureté de l'élastomère composant la première matière. Par exemple, l'élastomère de la première matière 41 a une dureté inférieure à 70 Shore et l'élastomère de la seconde matière 42 a une dureté supérieure à 70 Shore. La plaque d'élastomère est réalisée par surmoulage de la première matière sur la seconde matière ou par bi-injection. Le répartiteur d'efforts 20 est positionné sur la plaque d'élastomère 40 de façon à ce que sa face interne épouse le rayon de courbure de la paroi de canalisation 70 et que la protubérance 25 soit centrée sur la seconde partie 42 de la plaque d'élastomère 40.

Le dispositif de colmatage 10 selon l'invention est représenté sur la figure 9 lorsqu'il est serré sur la canalisation grâce à un moyen de serrage non représenté sur la figure, tel qu'une sangle formant une ceinture de serrage. La ceinture de serrage est serrée avec un couple de serrage au maximum égal à 40 N.m. Le répartiteur d'efforts 20 applique une pression de serrage sur la plaque d'élastomère qui de par son élasticité se déforme et est écrasée contre la paroi de canalisation 70. La seconde partie de matière 42 se déforme au point qu'une partie de matière pénètre dans l'orifice 80. A l'aplomb de l'orifice, l'élastomère de la seconde partie de matière 42 subit des contraintes et des déformations supérieures à celles que subit l'élastomère de la première partie de matière 41 située à la périphérie de l'orifice.

La zone active, correspondant à la protubérance 25 génère une pression sur la plaque d'élastomère supérieure à la pression générée par la zone inactive du répartiteur 20. Les deux zones du répartiteur d'efforts génèrent une répartition des pressions qui impose une contre-pression importante et proportionnelle au niveau de pression interne du fluide à l'endroit de la fuite et une pression moindre mais juste nécessaire et suffisante à la périphérie de la fuite pour ne pas endommager l'élastomère et garantir l'étanchéité du dispositif de colmatage selon l'invention de façon durable. Pour un couple de serrage de 40 N.m, la pression exercée par le dispositif de colmatage selon l'invention dépasse 80 bars à 20°C grâce à la protubérance 25 alors qu'elle plafonne à 80 bars sans la protubérance. Ainsi, la pression exercée est augmentée grâce à la protubérance 25 en forme de piston placée au centre de la plaque d'élastomère 40 et à la verticale de l'orifice 80. Lors du serrage, la seconde partie 42 de la plaque d'élastomère 40 est davantage déformée que la première et subit des contraintes de cisaillement importantes à l'endroit des arêtes de l'orifice 80. La seconde matière 42, constituée d'un élastomère de plus grande dureté présente une bonne tenue dans le temps et se dégrade moins vite que l'élastomère de plus faible dureté de la première matière. La première matière 41, beaucoup moins sollicitée en cisaillement que la seconde matière est plus molle et plus étanche. Si un problème d'étanchéité survient au niveau de la seconde matière 42, la première matière agit comme une seconde barrière et assure l'étanchéité prolongeant encore la durée de vie du dispositif de colmatage.

Selon une autre alternative de réalisation de l'invention, la plaque d'élastomère 40 comprend une troisième matière incluse dans la seconde matière 42, à la façon dont la seconde matière 42 est incluse dans la première matière 41 mais de taille inférieure. La troisième matière est entourée sur sa partie supérieure et ses bords latéraux par la seconde matière 42, les faces inférieures des trois matières étant situées dans le même plan composant la face inférieure de la plaque d'élastomère 40 destinée à venir en contact avec la paroi de canalisation 70 à l'endroit de l'orifice 80, la troisième matière étant destinée à être plaquée sur l'orifice 80 de façon à le recouvrir. La troisième matière est un élastomère de dureté supérieure à la dureté de l'élastomère composant la seconde matière.

La figure 10 représente une alternative de réalisation du dispositif de colmatage dans laquelle l'applicateur et le répartiteur d'efforts sont dissociés l'un de l'autre en étant deux parties distinctes. Le dispositif de colmatage selon cette alternative présente les mêmes effets techniques que le dispositif de colmatage présenté précédemment et dans lequel l'applicateur et le répartiteur représentent une seule partie du dispositif. Cette alternative diffère par son procédé de fabrication uniquement. Sur la figure 10, la vue est une coupe transversale du dispositif de colmatage 10 selon un plan transversal et perpendiculaire à l'axe longitudinal ZZ'. L'applicateur d'efforts 16 comprend sur sa face externe des fentes dans deux directions, une première série de fentes 23 selon des plans perpendiculaires à l'axe ZZ' et une seconde série de fentes 21 selon des directions parallèles à l'axe longitudinal ZZ', l'ensemble des fentes définissant une pluralité d'excroissances 22. Les excroissances 22 de l'applicateur d'efforts 16 présentent une différence d'épaisseur dans la largeur du répartiteur, la longueur du répartiteur étant considérée selon l'axe ZZ', de sorte que l'applicateur d'efforts à une épaisseur variable, maximale dans un plan de symétrie passant par l'axe ZZ' et qui va en diminuant vers les bords latéraux de l'applicateur. L'applicateur d'efforts 16 a pour but, comme les applicateurs d'efforts 12 et 14, de répartir les forces de serrage de la ceinture de serrage.

Le répartiteur d'efforts 20 est muni sur sa face interne 28 et en son centre d'une protubérance 25. La protubérance 25 de forme circulaire est d'épaisseur constante ou d'épaisseur maximale en son centre et décroissante en allant vers ses bords. Le répartiteur 20 est destiné à être intercalé entre l'applicateur d'efforts 16 et la plaque d'élastomère 40. L'utilisation d'un répartiteur d'efforts distinct de l'applicateur est adaptée à une utilisation sur des canalisations contenant un fluide à basse pression qui ne nécessite pas une pression sur la plaque d'élastomère de 80 bars. Le matériau utilisé pour l'applicateur 16 et le répartiteur d'efforts 20 est de préférence une matière plastique rigide mais déformable telle que du polyamide, du polypropylène ou du polycarbonate.

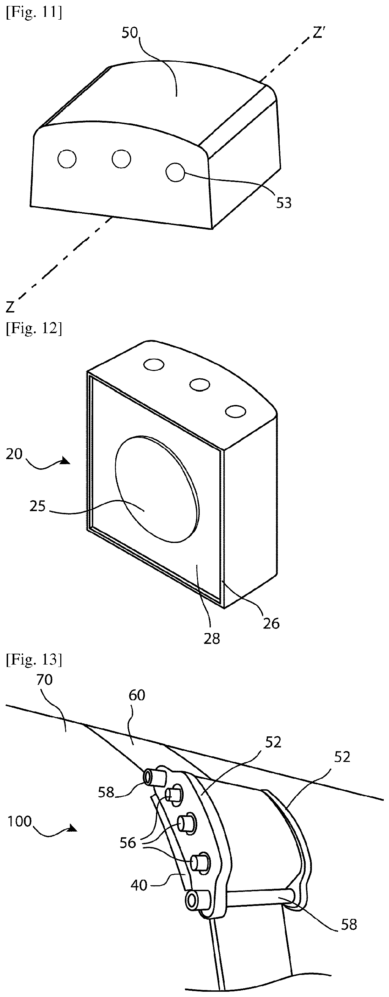

Selon un troisième mode de réalisation de l'invention illustrée sur les figures 11 à 14, le dispositif de colmatage 100 est adapté pour une canalisation de diamètre supérieure ou égale à 1,50 m. Le dispositif de colmatage 100 comprend un applicateur d'efforts 50 plein percé de part en part selon l'axe ZZ' par de préférence trois trous de fixation 53 débouchant sur les parois transversales de l'applicateur 50. Sur sa face interne, l'applicateur d'efforts 50 présente un répartiteur 20 situé sur sa face interne orientée vers la canalisation. Le répartiteur 20 comprend une protubérance 25 de forme circulaire située sur sa face interne 28 et de préférence centrée sur celle-ci. La protubérance est d'épaisseur constante ou d'épaisseur maximale en son centre et décroissante en allant vers ses bords.

Comme pour le dispositif de colmatage 10 des autres modes de réalisation, le répartiteur 20 du dispositif de colmatage 100 est constitué d'une zone active qui correspond à la surface de la protubérance 25 et d'une zone inactive située sur la face interne 28 en dehors de la protubérance 25 et qui comprend également les rebords 26. Les caractéristiques et les effets du répartiteur 20 décrits précédemment pour les premiers et seconds modes de réalisation s'appliquent pour le troisième mode de réalisation. Les alternatives de réalisation décrits précédemment concernant la plaque d'élastomère et concernant l'applicateur et le répartiteur distincts l'un de l'autre sont compatibles avec ce mode de réalisation.

En plus de l'applicateur d'efforts 50 et du répartiteur d'efforts 20, le dispositif de colmatage 100 comprend un support de ceinture de serrage à base d'une sangle 60. Ce support de ceinture de serrage à base de sangle est composé de deux flasques de maintien 52 et de moyens tels que des vis d'assemblage 56 pour maintenir ces flasques de maintien serrées contre les parois transversales de l'applicateur d'efforts 50. Les deux flasques 52 sont également reliées par deux barreaux tendeurs 58 sous forme de cylindre pouvant tourner librement autour de leur axe longitudinal respectif. La ceinture de serrage sous forme de sangle 60 est adaptée pour se placer sur l'applicateur 50 entre les deux flasques 52 et sous les barreaux tendeurs 58 avant d'être serrée autour de la canalisation 70. La libre rotation des barreaux tendeurs 58 facilite le positionnement du dispositif de colmatage 100 sur l'orifice avant le serrage.

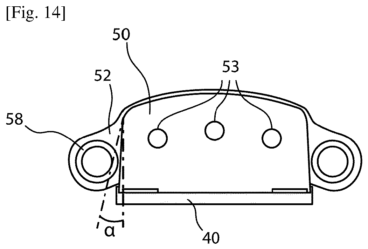

Comme on peut le voir sur la figure 14, les barreaux tendeurs 58 sont éloignés des parois longitudinales de l'applicateur de façon à ce que la ceinture de serrage sous forme d'une sangle forme avec elles un angle alpha compris entre 10 et 20 degrés. Cet angle est suffisamment grand pour ne pas bloquer la sangle et suffisamment petit pour diminuer les forces de friction de la sangle sur la canalisation et concentré l'effort de serrage sur l'applicateur 50. Cela présente également l'avantage d'éviter qu'une partie de l'effort de serrage de la sangle ne soit absorbée par les forces de friction.

Le dispositif selon l'invention a l'avantage de s'adapter sur des canalisations fragilisées car il concentre les efforts sur la fuite sans mettre de contraintes inutiles sur la canalisation.

## Revendications

1. Dispositif de colmatage (10, 100) d'une fuite sur une paroi de canalisation ou de réservoir (70) présentant un orifice (80), comprenant une plaque d'élastomère (40) appliquée sur ladite paroi à l'endroit de l'orifice, un applicateur d'efforts (12, 14, 16, 50) et un répartiteur d'efforts (20) appliqués sur la plaque d'élastomère et une ceinture de serrage formée d'une ou plusieurs sangles pour appliquer un couple de serrage sur ledit applicateur d'efforts, le répartiteur d'efforts (20) ayant une face interne (28) destinée à être plaquée sur la plaque d'élastomère (40),
**caractérisé en ce que** ladite face interne
présentant une zone active correspondant à une protubérance (25) de forme circulaire et une zone inactive située autour de ladite protubérance de façon à ce que lorsque le couple de serrage est appliqué sur l'applicateur d'efforts, la zone active, génère une pression sur la plaque d'élastomère supérieure à la pression générée par la zone inactive du répartiteur (20) sur la plaque d'élastomère.

2. Dispositif de colmatage (10) selon la revendication 1, dans lequel l'applicateur d'efforts (12, 14, 16) comprend sur sa face externe des fentes dans deux directions, une première série de fentes (23) selon des plans perpendiculaires à une direction ZZ', l'axe ZZ' représentant la direction longitudinale de la canalisation et une seconde série de fentes (21) selon des directions parallèles à l'axe longitudinal ZZ', lesdites fentes définissant une pluralité d'excroissances (22).

3. Dispositif de colmatage (10) selon la revendication 2, dans lequel les excroissances (22) de l'applicateur d'efforts (12, 16) présentent une différence d'épaisseur dans la largeur du répartiteur, la longueur du répartiteur étant considérée selon l'axe ZZ', de sorte que l'applicateur d'efforts a une épaisseur variable, maximale dans un plan de symétrie passant par l'axe ZZ' et qui va en diminuant vers les bords latéraux dudit applicateur.

4. Dispositif de colmatage (10) selon la revendication 2 ou 3, dans lequel la profondeur des fentes (21) de l'applicateur d'efforts (12) situées en vis-à-vis de la protubérance (25) sont plus profondes que les autres fentes.

5. Dispositif de colmatage (10) selon la revendication 2, dans lequel les excroissances (22) de l'applicateur d'efforts (14) sont d'épaisseur égale sauf pour les excroissances situées sur les deux bordures de l'applicateur situées parallèlement à l'axe longitudinal ZZ' dont l'épaisseur décroit vers les bords longitudinaux de l'applicateur.

6. Dispositif de colmatage (100) selon la revendication 1, dans lequel l'applicateur d'efforts (50) est plein et percé de part en part selon l'axe ZZ' par trois trous de fixation (53) débouchant sur ses parois transversales, ledit dispositif comprenant deux flasques de maintien (52) et des moyens tels que des vis d'assemblage (56) pour maintenir ces flasques de maintien serrées contre les parois transversales de l'applicateur d'efforts (50), les deux flasques (52) étant également reliées par deux barreaux tendeurs (58) sous forme de cylindre pouvant tourner librement autour de leur axe longitudinal respectif, la ceinture de serrage sous forme d'une sangle (60) étant adaptée pour se placer sur l'applicateur (50) entre les deux flasques(52) et sous les barreaux tendeurs (58) avant d'être serrée autour de la canalisation (70), les barreaux tendeurs (58) étant éloignés des parois longitudinales de l'applicateur (50) de façon à ce que ladite la ceinture de serrage sous forme d'une sangle forme avec elles un angle alpha compris entre 10 et 20 degrés.

7. Dispositif de colmatage (10, 100) selon l'une des revendications 1 à 6, dans lequel la protubérance (25) est centrée sur la face interne (28) du répartiteur.

8. Dispositif de colmatage (10, 100) selon la revendication 7, dans lequel la protubérance (25) du répartiteur d'efforts (20) a une raideur comprise entre 500 N/m et 5000 N/m.

9. Dispositif de colmatage (10, 100) selon l'une des revendications 1 à 8, dans lequel la plaque d'élastomère (40) comprend au moins deux matières, une première matière (41) qui constitue la partie supérieure et les bords de ladite plaque et une seconde matière (42) qui constitue la partie centrale et inférieure de ladite plaque, ladite seconde matière étant entourée sur sa partie supérieure et ses bords latéraux par ladite première matière, ladite seconde matière étant un élastomère de dureté supérieure à la dureté de l'élastomère composant ladite première matière, les faces inférieures des différentes matières étant situées dans le même plan composant la face inférieure de ladite plaque destinée à venir en contact avec la paroi de canalisation (70) à l'endroit de l'orifice (80), ladite seconde matière étant destinée à être plaquée sur ledit orifice.

10. Dispositif de colmatage (10, 100) selon la revendication 9, dans lequel la plaque d'élastomère (40) comprend une troisième matière incluse dans la seconde matière (42), ladite troisième matière étant entourée sur sa partie supérieure et ses bords latéraux par ladite seconde matière, les faces inférieures des trois matières étant situées dans le même plan composant la face inférieure de la plaque d'élastomère (40) destinée à venir en contact avec la paroi de canalisation (70) à l'endroit de l'orifice (80), la troisième matière étant destinée à être plaquée sur l'orifice (80) de façon à le recouvrir, ladite troisième matière étant un élastomère de dureté supérieure à la dureté de l'élastomère composant ladite seconde matière.

11. Dispositif de colmatage (10, 100) selon l'une des revendications 1 à 10, dans lequel l'applicateur d'efforts (12, 14, 16, 50) et le répartiteur d'efforts (20) sont deux parties distinctes.

12. Dispositif de colmatage (10, 100) selon l'une des revendications 1 à 11, dans lequel le matériau utilisé pour fabriquer l'applicateur d'efforts (12, 14, 16, 50) et le répartiteur d'efforts (20) est choisi parmi les matières plastiques rigides telles que du polyamide, du polypropylène ou du polycarbonate.

13. Dispositif de colmatage (10, 100) selon la revendication 12, dans lequel la protubérance (25) du répartiteur d'efforts (20) en polyamide a une raideur comprise entre 1400 N/m et 1700 N/m.

## Patentansprüche

1. Abdichtungsvorrichtung (10, 100) für ein Leck an einer Rohrleitungs- oder Behälterwand (70), die eine Öffnung (80) aufweist, umfassend eine Elastomerplatte (40), die auf die Wand an der Stelle der Öffnung aufgebracht ist, eine Kraftaufbringungseinrichtung (12, 14, 16, 50) und einen Kraftverteiler (20), die auf die Elastomerplatte aufgebracht sind, und einen Anzugsgurt, der aus einem oder mehreren Riemen ausgebildet ist, zum Aufbringen eines Anzugsdrehmoments auf die Kraftaufbringungseinrichtung, wobei der Kraftverteiler (20) eine Innenfläche (28) vorweist, die dazu bestimmt ist, auf die Elastomerplatte (40) plattiert zu werden, **dadurch gekennzeichnet, dass** die Innenfläche eine aktive Zone, die einem Vorsprung (25) mit kreisförmiger Form entspricht, und eine inaktive Zone aufweist, die um den Vorsprung herum gelegen ist, so dass, wenn das Anzugsdrehmoment auf die Kraftaufbringungseinrichtung aufgebracht wird, die aktive Zone einen Druck auf die Elastomerplatte erzeugt, der höher als der Druck ist, der durch die inaktive Zone des Verteilers (20) auf die Elastomerplatte erzeugt wird.

2. Abdichtungsvorrichtung (10) nach Anspruch 1, wobei die Kraftaufbringungseinrichtung (12, 14, 16) auf ihrer Außenfläche Schlitze in zwei Richtungen umfasst, eine erste Reihe von Schlitzen (23) gemäß Ebenen senkrecht zu einer Richtung ZZ', wobei die Achse ZZ' die Längsachse der Rohrleitung darstellt, und eine zweite Reihe von Schlitzen (21) gemäß Richtungen parallel zu der Längsachse ZZ', wobei die Schlitze eine Vielzahl von Auswüchsen (22) definieren.

3. Abdichtungsvorrichtung (10) nach Anspruch 2, wobei die Auswüchse (22) der Kraftaufbringungseinrichtung (12, 16) einen Dickenunterschied in der Breite des Verteilers aufweisen, wobei die Länge des Verteilers entlang der Achse ZZ' betrachtet wird, sodass die Kraftaufbringungseinrichtung eine variable Dicke aufweist, die in einer Symmetrieebene maximal ist, die durch die Achse ZZ' verläuft, und die sich zu den seitlichen Rändern der Kraftaufbringungseinrichtung hin verringert.

4. Abdichtungsvorrichtung (10) nach Anspruch 2 oder 3, wobei die Tiefe der Schlitze (21) der Kraftaufbringungseinrichtung (12), die gegenüber dem Vorsprung (25) gelegen sind, tiefer als die der anderen Schlitze ist.

5. Abdichtungsvorrichtung (10) nach Anspruch 2, wobei die Auswüchse (22) der Kraftaufbringungseinrichtung (14) von gleicher Dicke sind, mit Ausnahme der Auswüchse, die an den zwei Rändern der Aufbringungseinrichtung gelegen sind, die parallel zu der Längsachse ZZ' gelegen sind, deren Dicke zu den Längsrändern der Aufbringungseinrichtung hin abnimmt.

6. Abdichtungsvorrichtung (100) nach Anspruch 1, wobei die Kraftaufbringungseinrichtung (50) massiv ist und gemäß der Achse ZZ' von drei Befestigungslöchern (53) vollkommen durchbohrt ist, die auf ihren Querwänden münden, die Vorrichtung umfassend zwei Halteflansche (52) und Mittel wie Montageschrauben (56) zum Halten dieser Halteflansche gegen die Querwände der Kraftaufbringungseinrichtung (50) angezogen, wobei die zwei Flansche (52) ebenfalls durch zwei Spannstäbe (58) in Form von Zylindern verbunden sind, die sich frei um ihre jeweilige Längsachse drehen können, wobei der Anzugsgurt in Form eines Riemens (60) zum Platzieren auf der Aufbringungseinrichtung (50) zwischen den zwei Flanschen (52) und unter den Spannstäben (58) angepasst ist, bevor er um die Rohrleitung (70) angezogen wird, wobei die Spannstäbe (58) von den Längswänden der Aufbringungseinrichtung (50) derart entfernt sind, dass der Anzugsgurt in Form eines Riemens mit ihnen einen Winkel alpha zwischen 10 und 20 Grad ausbildet.

7. Abdichtungsvorrichtung (10, 100) nach einem der Ansprüche 1 bis 6, wobei der Vorsprung (25) auf der Innenfläche (28) des Verteilers zentriert ist.

8. Abdichtungsvorrichtung (10, 100) nach Anspruch 7, wobei der Vorsprung (25) des Kraftverteilers (20) eine Steifigkeit zwischen 500 N/m und 5000 N/m aufweist.

9. Abdichtungsvorrichtung (10, 100) nach einem der Ansprüche 1 bis 8, wobei die Elastomerplatte (40) mindestens zwei Materialien umfasst, ein erstes Material (41), das den oberen Teil und die Ränder der Platte ausmacht, und ein zweites Material (42), das den mittleren und unteren Teil der Platte ausmacht, wobei das zweite Material an seinem oberen Teil und seinen seitlichen Rändern von dem ersten Material umgeben ist, wobei das zweite Material ein Elastomer mit einer Härte ist, die größer als die Härte des Elastomers ist, das das erste Material bildet, wobei die unteren Flächen der verschiedenen Materialien in derselben Ebene liegen, die die untere Fläche der Platte bildet, die dazu bestimmt ist, mit der Rohrleitungswand (70) an der Stelle der Öffnung (80) in Kontakt zu kommen, wobei das zweite Material dazu bestimmt ist, auf die Öffnung plattiert zu werden.

10. Abdichtungsvorrichtung (10, 100) nach Anspruch 9, wobei die Elastomerplatte (40) ein drittes Material umfasst, das in dem zweiten Material (42) eingeschlossen ist, wobei das dritte Material an seinem oberen Teil und seinen seitlichen Rändern von dem zweiten Material umgeben ist, wobei die unteren Flächen der drei Materialien in derselben Ebene gelegen sind, die die untere Fläche der Elastomerplatte (40) bildet, die dazu bestimmt ist, mit der Rohrleitungswand (70) an der Stelle der Öffnung (80) in Kontakt zu kommen, wobei das dritte Material dazu bestimmt ist, auf die Öffnung (80) plattiert zu werden, um sie zu bedecken, wobei das dritte Material ein Elastomer mit einer Härte ist, die größer als die Härte des Elastomers ist, das das zweite Material bildet.

11. Abdichtungsvorrichtung (10, 100) nach einem der Ansprüche 1 bis 10, wobei die Kraftaufbringungseinrichtung (12, 14, 16, 50) und der Kraftverteiler (20) zwei getrennte Teile sind.

12. Abdichtungsvorrichtung (10, 100) nach einem der Ansprüche 1 bis 11, wobei das Material, das zum Herstellen der Kraftaufbringungseinrichtung (12, 14, 16, 50) und des Kraftverteilers (20) verwendet wird, aus starren Kunststoffen wie Polyamid, Polypropylen oder Polycarbonat ausgewählt ist.

13. Abdichtungsvorrichtung (10, 100) nach Anspruch 12, wobei der Vorsprung (25) des Kraftverteilers (20) aus Polyamid eine Steifigkeit zwischen 1400 N/m und 1700 N/m aufweist.

## Claims

1. Device (10, 100) for sealing a leak in a pipe or reservoir wall (70) having an opening (80), comprising an elastomer plate (40) applied to said wall at the site of the opening, a force applicator (12, 14, 16, 50) and a force distributor (20) applied to the elastomer plate and a clamping belt including one or more straps for applying a clamping torque to said force applicator, the force distributor (20) having an inner face (28) intended to be placed onto the elastomer plate (40),
**characterized in that** the inner face having an active zone corresponding to a protuberance (25) of circular shape and an inactive zone situated around said protuberance, in such a way that, when the clamping torque is applied to the force applicator, the active zone generates a pressure on the elastomer plate greater than the pressure generated by the inactive zone of the distributor (20) on the elastomer plate.

2. The sealing device (10) according to claim 1, wherein the force applicator (12, 14, 16) comprises slots in two directions on its outer face, a first series of slots (23) in planes perpendicular to a ZZ' direction, the ZZ' axis representing the longitudinal direction of the pipe, and a second series of slots (21) in directions parallel to the longitudinal ZZ' axis, said slots defining a plurality of protrusions (22).

3. The sealing device (10) according to claim 2, wherein the protrusions (22) of the force applicator (12, 16) have a difference in thickness across the width of the applicator, the length of the latter being considered along the ZZ' axis, and thus the force applicator has a variable thickness, maximum in a plane of symmetry passing through the ZZ' axis and which decreases towards the lateral edges of said applicator.

4. The sealing device (10) according to claim 2 or 3, wherein the depth of the slots (21) of the force applicator (12) located opposite the protuberance (25) is greater than that of the other slots.

5. The sealing device (10) according to claim 2, wherein the protrusions (22) of the force applicator (14) are of equal thickness except for the protrusions located on the two edges of the applicator located parallel to the longitudinal ZZ' axis whose thickness decreases towards the longitudinal edges of the applicator.

6. The sealing device (100) according to claim 1, wherein the force applicator (50) is solid and pierced right through along the ZZ' axis by three fixing holes (53) opening onto its transverse walls, said device comprising two retaining flanges (52) and means such as assembly screws (56) for retaining these holding flanges tight against the transverse walls of the force applicator (50), the two flanges (52) also being connected by two tension bars (58) in the form of a cylinder which can rotate freely around their respective longitudinal axis, the clamping belt in the form of a strap (60) being adapted to be placed on the applicator (50) between the two flanges (52) and under the tensioning bars (58) before being clamped around the pipe (70), the tensioning bars (58) being distant from the longitudinal walls of the applicator (50) so that said tightening belt in the form of a strap forms with them an alpha angle of between 10 and 20 degrees.

7. The sealing device (10, 100) according to any of claims 1 to 6, wherein the protuberance (25) is centered on the inner face (28) of the distributor.

8. The sealing device (10, 100) according to claim 7, wherein the protuberance (25) of the force distributor (20) has a stiffness of between 500 N/m and 5000 N/m.

9. The sealing device (10, 100) according to any of claims 1 to 8, wherein the elastomer plate (40) comprises at least two materials, a first material (41) which constitutes the upper part and edges of said plate, and a second material (42) which constitutes the central and lower part of said plate, said second material being surrounded on its upper part and its lateral edges by said first material, said second material being an elastomer with a hardness greater than the hardness of the elastomer composing said first material, the lower faces of the different materials being located in the same plane composing the lower face of said plate intended to come into contact with the pipe wall (70) at the location of the opening (80), said second material being intended to be pressed onto said opening.

10. The sealing device (10, 100) according to claim 9, wherein the elastomer plate (40) comprises a third material included in the second material (42), said third material being surrounded on its upper part and its lateral edges by said second material, the lower faces of the three materials being located in the same plane composing the lower face of the elastomer plate (40) intended to come into contact with the pipe wall (70) at the location of the opening (80), the third material being intended to be placed on the opening (80) so as to cover it, said third material being an elastomer with a hardness greater than the hardness of the elastomer composing said second material.

11. The sealing device (10, 100) according to any of claims 1 to 10, wherein the force applicator (12, 14, 16, 50) and the force distributor (20) are two distinct parts.

12. The sealing device (10, 100) according to any of claims 1 to 11, wherein the material used to manufacture the force applicator (12, 14, 16, 50) and the force distributor (20) is chosen from rigid plastic materials such as polyamide, polypropylene or polycarbonate.

13. The sealing device (10, 100) according to claim 12, wherein the protuberance (25) of the force distributor (20) made of polyamide has a stiffness of between 1400 N/m and 1700 N/m.
